Europäisches Patentamt

European Patent Office

Office européen des brevets

(11) Publication number: **0 487 914 A2**

# EUROPEAN PATENT APPLICATION

(21) Application number: **91118426.5**

(22) Date of filing: **29.10.91**

(51) Int. Cl.⁵: **G11B 5/48**

(30) Priority: **29.11.90 US 621178**

(43) Date of publication of application:
**03.06.92 Bulletin 92/23**

(84) Designated Contracting States:
**DE FR GB IT**

(71) Applicant: **Hewlett-Packard Company**
**3000 Hanover Street**
**Palo Alto, California 94304(US)**

(72) Inventor: **Foote, Wayne E.**
**276 Sandra Street**
**Eagle, Idaho 83616(US)**
Inventor: **Mui, Paul K.**
**710 7th Avenue**
**San Francisco, California 94118(US)**

(74) Representative: **Baillie, Iain Cameron**
**c/o Ladas & Parry, Altheimer Eck 2**
**W-8000 München 2(DE)**

(54) **Stiffened load beam for a magnetic disk drive.**

(57) A load beam (14) for incorporation into a disk drive is provided with an arm attachment area (17) at one end and a resilient magnetic head attachment (16) at another end, the head attachment (16) located coincident with the load beam's axis of suspension (32). The load beam (14) is formed from an elongated thin metal sheet and has a flex region (17) and a mid-region (20). The mid-region (20) comprises a pair of elongated ribs (22, 24) formed along opposing edges of the metal sheet and has a convex design (50, 52, 54, 56, 58, 60) formed between the ribs to provide added stiffness to the mid-region (20). A number of formed surfaces are disclosed.

# FIG. 3.

FIELD OF THE INVENTION

This invention relates to magnetic head mounts for disk drives, and, more particularly, to an improved design load beam for a flexible magnetic head suspension system.

BACKGROUND OF THE INVENTION

A load beam is used to resiliently mount a magnetic transducer so that it closely follows a moving disk. Such load beams must meet a number of conflicting design criteria. They must enable the magnetic transducer to follow a moving disk surface at a constant spacing. They must also enable the magnetic transducer to rotate about the beam's axis of suspension while simultaneously enabling the transducer to alter its position in pitch about the axis of suspension. These requirements dictate that the load beam be substantially flexible, but this, in turn, results in the beam/transducer structure exhibiting a decreased mechanical resonant frequency. Such lower resonant frequencies presents serious problems for transducer positioning servo systems.

As a magnetic transducer floats over a track and is engaged in either reading or writing data, it continually provides signal information that indicates whether the transducer is to one or the other side of a track's center. In response, the transducer control servo system moves the beam/transducer assembly to correct for such misalignments. The larger the bandwidth of the servo system, the higher its effective gain and thus, the more effectively the system functions to correct transducer/track misalignments. On the other hand, the bandwidth (and thus, the gain) of the servo system is limited by mechanical system resonances which can induce error signals and cause system failure.

An acceptable figure of merit is that the bandwidth of a servo control system should be less than one third of the system's lowest mechanical resonant frequency. This generally dictates a bandwidth for the servo system of approximately 400 Hertz. Ideally, a larger bandwidth servo system is desirable due to the fact that it enables an increased system gain.

The prior art with respect to load beam/magnetic transducer assemblies shows various methods for adjusting beam stiffness. In U.S. Patent 3,931,641 to Watrous, a transducer suspension includes a triangular-shaped load beam with two flexible narrow fingers and a relatively stiff crossleg. Each narrow finger is provided with bent up flanges to provide added stiffness.

In Japanese Patent 60-127578 to Oota, a modification is shown to the Watrous structure described in U.S. Patent 3,931,641. Oota employs a further cross member between the two flexible fingers for additional stiffening purposes.

In U.S. Patent 4,167,765 to Watrous, a planar load beam is shown having a generally triangular shape with flanges formed along the long extremities of the beam to provide added stiffness. The Watrous beam has three sections, a distal section that attaches to a flexure/transducer assembly, a proximal section that is flat and provides flexure when the beam loads the transducer against a disk, and a planar mid-section of generally triangular shape having bent stiffening flanges.

Many additional patents describe variations of the Watrous structure. See, for instance, U.S. Patents 4,605,979 to Inoue et al., 4,620,251 to Gitzendanner, 4,734,805 to Yamada et al., 4,807,054 to Sorensen et al., 4,809,104 to Knudsen et al., and 4,829,395 to Coon et al. Japanese patent 60-50778 to Hamazaki is also similar to the Watrous structure.

Another prior art technique is to not stiffen the load beam, but to use a head damper to reduce the amplitude of the load beam motion at the resonant frequency. Such a damper usually consists of a thin sheet of metal adhesively adhered to the planar midsection flat surface of the load beam using a polymeric material. Shear forces in the polymeric material (that is constrained between the two sheet metal layers) then provides damping to the load beam. Such head dampers present problems because their damping properties change with temperature. In addition, head tracking errors may occur due to a creep of the damper's adhesive layer. Finally, dampers add cost to the load beam.

Accordingly, it is an object of this invention to provide an improved load beam for supporting a magnetic transducer.

It is another object of this invention to provide load beams having higher mechanical resonant frequencies than heretofore.

It is still another object of this invention to provide an improved load beam with higher mechanical resonant frequencies that is inexpensive to manufacture and whose characteristics do not change with changes in the ambient.

SUMMARY OF THE INVENTION

A load beam for incorporation into a disk drive is provided with an arm attachment area at one end and a resilient magnetic head attachment at another end, the head attachment located coincident with the load beam's axis of suspension. The load beam is formed from an elongated thin metal sheet and has a flex region and a mid-region. The mid-region comprises a pair of elongated ribs formed along opposing edges of the metal sheet and has a convex design formed between the ribs to provide added stiffness to the mid-region. A number of formed surfaces are disclosed.

DESCRIPTION OF THE DRAWINGS

Fig. 1 is a plan view of a prior art transducer mount assembly including a load beam.

Fig. 2 is a perspective view of the load beam of Fig. 1, with the head attachment shown schematically.

Fig. 3 is a plan view of a load beam having a plurality of X's formed between its ribs.

Fig. 4 is a perspective view of the load beam of Fig. 3.

Fig. 5 is a plan view of a load beam having a formed section between its ribs, such formed section exhibiting a plurality of X's within a frame.

Fig. 6 is a perspective view of the load beam of Fig. 5.

Fig. 7 is a load beam having a formed section between its ribs in the form of a raised polygonal surface.

Fig. 8 is a perspective view of the beam of Fig. 7.

Fig. 9 is a plan view of a load beam having a formed triangular opening between the beam's ribs.

Fig. 10 is a perspective view of Fig. 9.

Fig. 11 is a plan view of a load beam having a plurality of formed, flattened, open-topped, pyramidal shapes between its ribs.

Fig. 12 is a perspective view of the beam structure of Fig. 11.

Fig. 13 is a plan view of a load beam having a plurality of flattened conical/hemispherical shapes formed between its ribs.

Fig. 14 is a perspective view of the load beam of Fig. 13.

DETAILED DESCRIPTION OF THE INVENTION

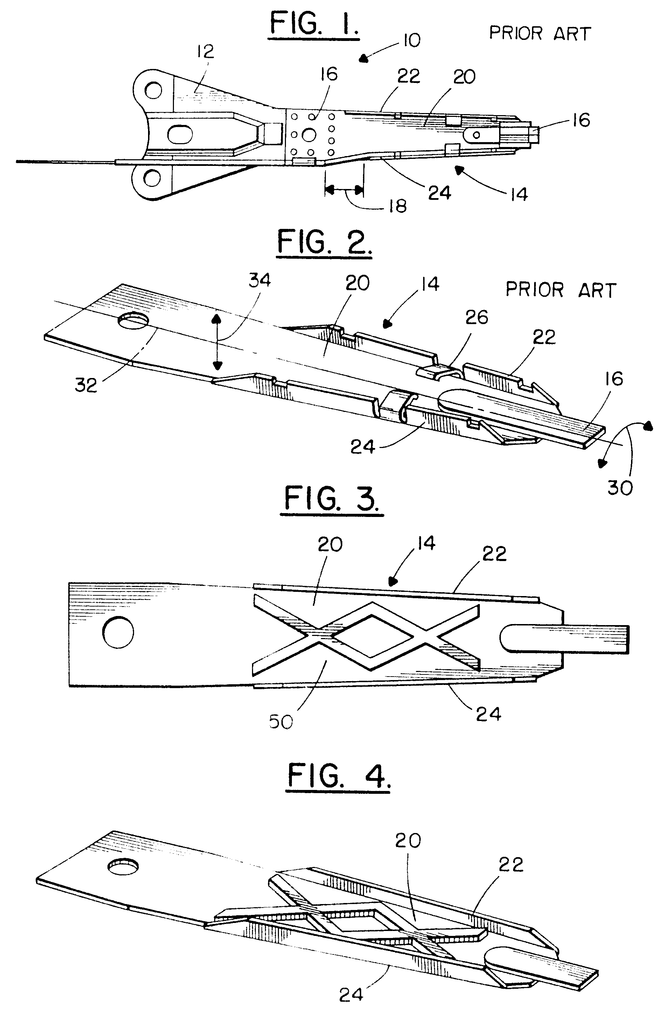

Referring now to Fig. 1, a plan view is shown of a prior art head/arm attachment structure. Head/arm 10 comprises three main sections, an arm attachment section 12 a load beam section 14, and a head attachment flexure 16. Load beam section 14 includes an attachment area 17 that connects to arm attachment section 12 via appropriate attachment means (e.g., welds, swaged fittings etc.). Load beam section 14 further comprises a flexible region 18 and a mid-region 20 which is bounded along its edges by flanges 22 and 24.

In Fig. 2, arm attachment section 12 is not illustrated and head attachment flexure 16 is shown schematically. Load beam 14 is constructed of a thin metal sheet that is formed to produce flanges 22 and 24. A pair of ramps 26 are provided for use in loading the magnetic heads onto a disk surface. Mid-region 20 of load beam 14 is flat in this prior art structure.

During operation, load beam 14 will exhibit two separate modes of mechanical resonance, one torsional and one bending. The torsional mode (indicated by double-ended arrow 30) is characterized by an oscillation about axis of suspension 32. Bending mode resonance is characterized by oscillation of load beam 14 about axis of suspension 32 in the direction indicated by double-ended arrow 34.

In actual size, load beam 14 is approximately 30mm in length and varies in width from 6mm at its proximal end, to 5mm at its distal end. It is comprised of sheet stainless steel having a thickness of 0.1mm.

Fundamental (first) torsional and bending mode mechanical resonant frequencies of load beam 14 are 1280 and 1910 Hertz respectively. Table 1 below indicates the fundamental torsional bending mode frequencies for the prior art load beam shown in Figs. 1 and 2 and load beams modified in accordance with the invention, as shown in Figs. 3-14.

TABLE 1

| Load beam | FREQUENCY (Hz) | |
|---|---|---|
| | 1st Torsional Mode | 1st Bending Mode |
| Figs. 1,2 | 1280 | 1910 |
| Figs. 3,4 | 1760 | 2150 |
| Figs. 5,6 | 1780 | 2020 |
| Figs. 7,8 | 1530 | 2220 |
| Figs. 9,10 | 1540 | 2070 |
| Figs. 11,12 | 1910 | 2130 |
| Figs. 13,14 | 1990 | 2050 |

It has been found that the fundamental torsional and bending mode resonant frequencies of load beams can be substantially increased by providing a convex design in the mid-region of the load beam between flanges 22 and 24. The prior art flat mid-section of the load beam does not provide high torsional stiffness. The convex designs of this invention are formed in flat portion 20 of load beam 14. It has been found that the larger the area encompassed by the convex design in the load beam's mid-region, the better the torsional stiffness that can be obtained. The deformable area is, however, limited as it cannot encroach on flexible region 18 at one end and, at the other end, head flexure 16. In each case, the convex design is formed by stamping or forming the flat portion of mid-region 20 to provide the indicated design. In certain instances, it may be required that an opening be stamped in flat portion 22 to enable the formation of the desired convex shape.

Turning now to Figs. 3 an 4, convex shape 50 comprises two or more X's connected head to toe. The convex design covers a substantial portion of flat region 20 between flanges 22 and 24. As shown in Table 1, both the first torsional and bending mode resonant frequencies see substantial increases when such a shape is formed as shown.

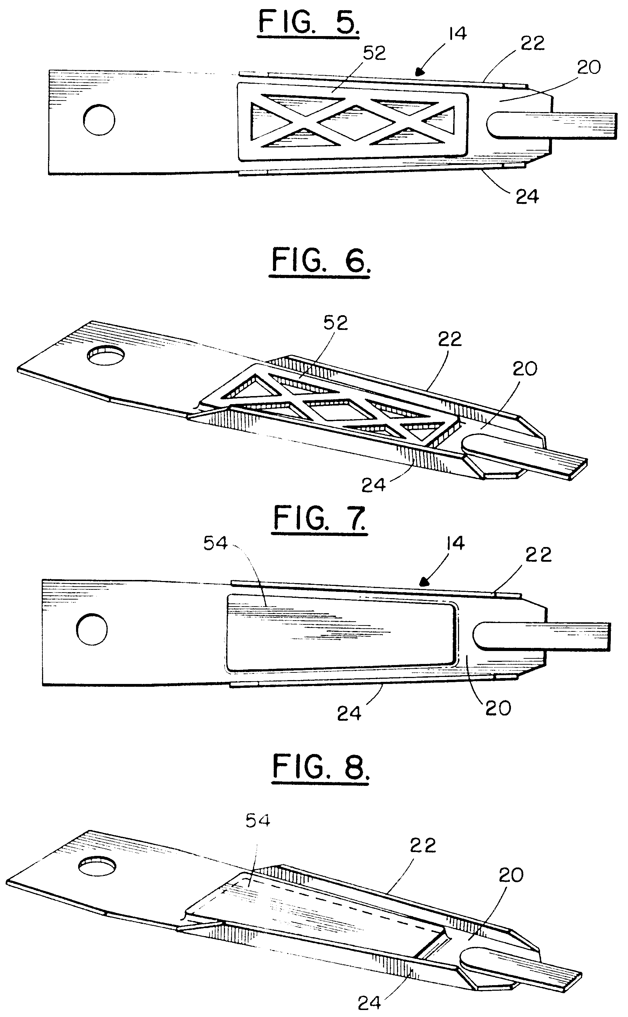

In Figs. 5 and 6, convex design 52 comprises a plurality of X's, connected head to toe, surrounded by a frame. It is preferred that convex design 52 be raised as high as possible from flat surface 20; however, this is obviously a function of the material, its workability and the complexity of the formed shape. In Fig. 6, the preferred height is .02 inches (0.5 mm). The fundamental torsional and bending mode frequencies for the structure shown in Figs. 5 and 6 are 1780 and 2020 Hz respectively.

In Figs. 7 and 8, a four sided polygonal shape 54 has been formed in flat portion 20. Such a structure exhibits fundamental torsional and bending frequencies of 1530 and 2220 Hz respectively.

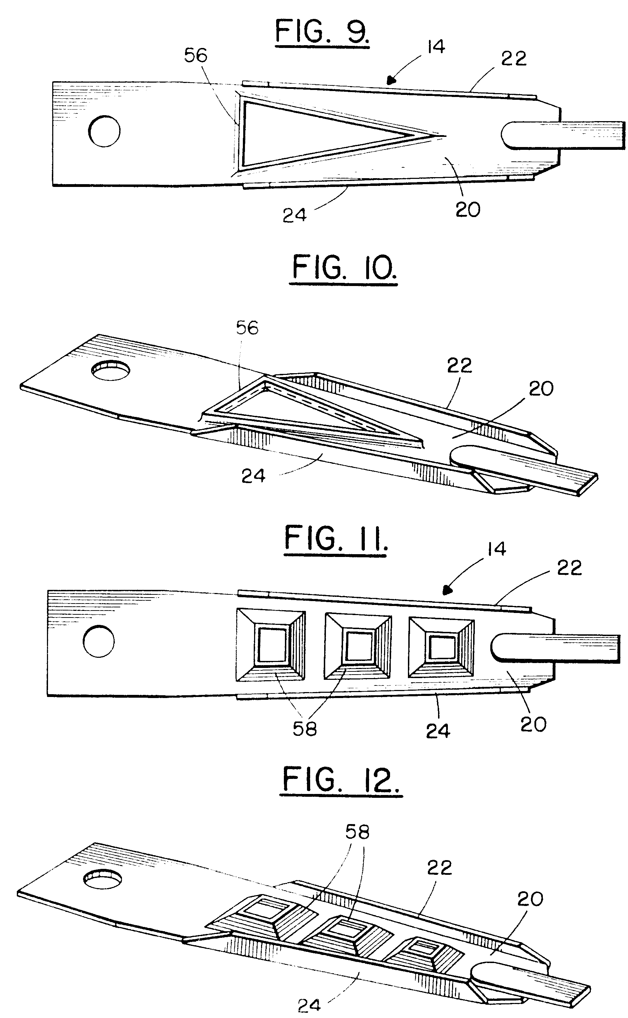

In Figs. 9 and 10, an open-top, triangular, raised section 56 has been formed in flat surface 20. While it is preferred that the formed structure between flanges 22 and 24 be continuous in shape, it may not be possible to provide an entirely closed arrangement due to material limitations. Such is the case in the structure shown in Figs. 9 and 10 where aperture 59 is provided. It is to be noted that upwardly extending flanges 57 are continuous and completely surround aperture 59. As shown in Table 1, the fundamental torsional and bending mode frequencies for the structure of Fig. 9 are 1540 and 2070 Hz respectively.

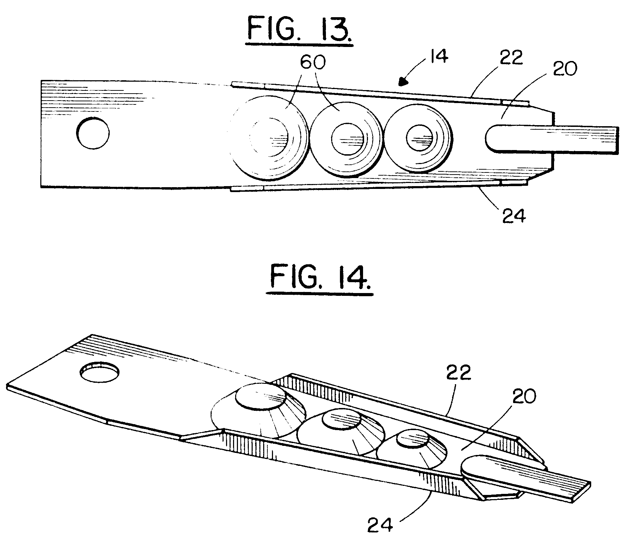

In Figs. 11 and 12, a plurality of open-topped pyramids 58 have been formed into flat surface 20 of load beam 14. As can be seen from Table 1, the fundamental torsional and bending mode frequencies from such a structure are 1910 and 2130 Hz respectively.

In Figs. 13 and 14, a plurality of flat topped conical sections 60 are formed into flat surface 20 and result in the best torsional mode resonant frequency of 1990 Hz, with a modestly decreased bending mode frequency of 2050 Hz. Conical sections 60 may be modified to approximate hemispherical bumps and, in such case, will cause load beam 14 to exhibit substantially similar torsional bending mode fundamental frequencies as for the conical configurations.

As can be seen from the above, the provision of a formed convex shape between flanges 22 and 24, within the mid-region of load beam 14 enables substantially increased torsional and bending resonant frequencies to be obtained. As a result, a controlling servo system can be designed so that its bandwidth is increased, thereby providing additional gain and control capabilities.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

**Claims**

1. A load beam (14) for incorporation into a disk drive mechanism, said load beam having an arm attachment area (17) at one end and means (16) for resiliently attaching a magnetic head at another end, said resilient attachment (16) located coincident with an axis of suspension (32) of said load beam (14), said load beam (14) further formed from an elongated thin metal sheet and having a flex region and a mid-region (20), said mid region comprising:

   a pair of elongated flanges (22, 24) formed along opposing edges of said metal sheets; and

   a convex design (50, 52, 54, 56, 58, 60) formed in said metal sheet between said metal flanges (22, 24), whereby said metal sheet exhibits a formed surface between said flanges (22, 24) and provides an added stiffness to said mid-region (20).

2. The load beam as recited in claim 1 wherein said convex design (50, 54, 56, 58, 60) is positioned symmetrically about said axis of suspension (32) and extends substantially along said mid-region (20).

3. The load beam as recited in claims 1 or 2 wherein said design (50) is in the form of a plurality of X's, touching head to toe.

4. The load beam as recited in claim 3 wherein said plurality of X's (52) are surrounded by a formed frame which is in contact with the heads and toes of said X's.

5. The load beam as recited in claims 1 or 2 wherein said convex design (54) is in the form of a raised continuous, four sided polygon.

6. The load beam as recited in claim 5 wherein said four sided polygon (54) has a trapezoidal raised surface shape.

7. The load beam as recited in claims 1 or 2 wherein said convex design (56) is in the form of a continuous raised triangular flange, a base of said triangular form being oriented adjacent said flex region (17) and an apex of said triangular form oriented adjacent to said resilient magnetic head attachment (16).

8. The load beam as recited in claims 1 or 2 wherein said convex design (58) is in the form of a plurality of flattened pyramids, each said pyramid having an aperture in its flattened portion.

9. The load beam as recited in claims 1 or 2 wherein said convex design (60) is in the form of a plurality of closed protrusions extending from said metal sheet between said elongated flanges.

10. The load beam as recited in claim 9 wherein each said protrusion (60) is in the form of a flattened cone having a continuous surface.

11. The load beam as recited in claim 10 wherein said flattened cones (60) vary in size from large to small, with the largest cone being positioned adjacent to said flex region and the smallest said cone adjacent said resilient attachment for said magnetic head.

EP 0 487 914 A2

FIG. 1.

PRIOR ART

FIG. 2.

PRIOR ART

FIG. 3.

FIG. 4.

6

## FIG. 5.

## FIG. 6.

## FIG. 7.

## FIG. 8.

## FIG. 9.

## FIG. 10.

## FIG. 11.

## FIG. 12.

FIG. 13.

FIG. 14.